# EUROPÄISCHE PATENTSCHRIFT

(11) **EP 3 486 006 B1**
(45) Veröffentlichungstag und Bekanntmachung des Hinweises auf die Patenterteilung: **05.10.2022**
(21) Anmeldenummer: 18204063.4
(22) Anmeldetag: 02.11.2018
(51) Int. Cl.: B33Y 40/00, B29C 64/153, B29C 64/241, B29C 64/321, B29C 64/35, B25H 1/18, B22F 12/00, B22F 10/70, B22F 10/20, B33Y 30/00, B23Q 3/06

(54) **VORRICHTUNG ZUR LAGERUNG UND HALTERUNG EINER BESCHICHTEREINHEIT EINES METALL-3D-DRUCKERS**
DEVICE FOR STORING AND HOLDING A COATER UNIT OF A METAL 3D PRINTER
DISPOSITIF DE STOCKAGE ET DE MAINTIEN D'UNE UNITÉ DE REVÊTEMENT POUR L'IMPRÉSSION DE MÉTAL EN 3D

(30) Priorität: 17.11.2017 DE 102017127161
(43) Veröffentlichungstag der Anmeldung: 22.05.2019
(73) Patentinhaber: Werling, Marco, 76764 Rheinzabern (DE)
(72) Erfinder: Werling, Marco, 76764 Rheinzabern (DE)
(74) Vertreter: Christ, Niko

(56) Entgegenhaltungen:
- CN-U- 204 505 217
- CN-U- 204 977 458
- US-A- 2 536 239
- US-A- 2 991 994
- US-A1- 2010 247 742
- US-A1- 2013 000 553

## Beschreibung

Die vorliegende Erfindung betrifft eine Vorrichtung zur Lagerung und Halterung einer Beschichtereinheit eines Metall-3D-Druckers, gemäß dem beigefügten Anspruch 1.

Eine derartige Vorrichtung ist konkret aus der US 2 991 994 A oder der CN 204 505 217 U vorbekannt, welche eine Auflagerung eines Motorblocks, insbesondere zum Reinigen der Ventile, ermöglichen soll. Allgemein sind Vorrichtungen zur Lagerung und Halterung einer Beschichtereinheit eines Metall-3D-Druckers etwa aus der US 2010/247742 A1, der CN 204 977 458 U oder der US 2013/000553 A1 bekannt.

In der Industrie gewinnen so genannte Metall-3D-Drucker zunehmend an Bedeutung. Sie erlauben einen schichtweisen Aufbau von Konstruktionen, indem innerhalb eines definierten Bauraums schichtweise ein Metallpulver aufgetragen wird, bis der Bauraum gefüllt oder die Konstruktion abgeschlossen ist. Hierbei wird nach Abschluss einer jeden Schicht mithilfe eines Lasers innerhalb der jeweiligen Schicht dasjenige Material verschweißt, welches zur Konstruktion gehören soll, während das andere Material lose im Bauraum verbleibt. Jede Schicht wird dabei, sofern eine solche vorhanden ist, mit der vorherigen Schicht verbunden oder eine neue erste Schicht geschaffen.

Unabhängig von der Größe der Konstruktion ist am Ende des Vorgangs prinzipiell der Bauraum zumindest teilweise mit losem, ungenutztem Metallpulver gefüllt, während lediglich die Konstruktion aufgrund des Verschweißens fest ist. Das ungenutzte Metallpulver kann hierbei ohne Weiteres wiederverwendet werden.

Zur Befüllung wird einem Metall-3D-Drucker wenigstens eine Pulverflasche oder allgemein ein Pulverbehälter zugeordnet, der in der Regel kopfüber auf dem Druckergehäuse angeflanscht wird. Das Pulver rieselt in den Metall-3D-Drucker und wird mithilfe einer Beschichtereinheit schichtweise im Bauraum verteilt.

Das nach der Konstruktion im Bauraum verbliebene lose Metallpulver kann über einen Ablauf in einen Pulverbehälter abgelassen werden, der später wieder zum schichtweisen Befüllen des Bauraums eingesetzt werden kann. Lediglich das verschweißte Material sowie eventuell in der Konstruktion eingeschlossenes Material können nicht zurückgewonnen werden.

Allerdings kann es sein, dass nicht alle Teile des Metall-3D-Druckers aufgrund der Schwerkraft in einen unter dem Bauraum angeordneten Pulverbehälter entleert werden können. Manche Teile müssen auch ausgebaut werden um sie sorgfältig zu reinigen und das Metallpulver zurückzugewinnen, so etwa die Beschichtereinheit selbst. Auch sollte die Beschichtereinheit regelmäßig einer gründlichen Überprüfung unterzogen werden.

Bei einer Zerlegung der Beschichtereinheit muss regelmäßig damit gerechnet werden, dass Metallpulver aus der Beschichtereinheit herausrieselt während dieser kopfüber gehalten wird und insbesondere während er zerlegt wird. Das Metallpulver ist sehr fein und kann sich in der Lunge eines Arbeiters absetzen und dessen Gesundheit sehr belasten. Ein sehr gründlicher Umgang mit dem Metallpulver ist neben dessen Materialwert vor allem aufgrund dieser Gesundheitsgefahr unumgänglich.

Vor diesem Hintergrund liegt der vorliegenden Erfindung die Aufgabe zugrunde, eine Vorrichtung zur Lagerung und Halterung von Beschichtereinheiten zu schaffen, welche die Wartung vereinfacht und unterstützt.

Dies gelingt durch eine Vorrichtung zur Lagerung und Halterung einer Beschichtereinheit eines Metall-3D-Druckers gemäß den Merkmalen des Anspruchs 1. Weitere sinnvolle Ausgestaltungen eines solchen Vorrichtung können den sich anschließenden Unteransprüchen entnommen werden.

Erfindungsgemäß ist eine Vorrichtung zur Lagerung und Halterung gemäß dem beigefügten Anspruch 1 vorgesehen. Die Drehböcke selbst bestehen jeweils aus einem Standfuß, an dem wiederum jeweils ein Trägerelement drehbar befestigt ist. Hierbei sind die Trägerelemente so an den Standfüßen befestigt, dass sie einander zugewandt sind und eine zwischen den beiden Drehböcken aufgenommene Beschichtereinheit beiderseits an jeweils einem Trägerelement befestigt werden kann. Zur Befestigung bildet jedes der Trägerelemente eine Auflage, auf welcher die Beschichtereinheit mit einem Flansch aufgelegt werden kann. Hierbei sind die Trägerelemente oder zumindest die Auflagen austauschbar, so dass eine Anpassung an die jeweiligen Beschichtereinheiten auf diesem Weg erfolgen kann. Dennoch bleiben die Trägerelemente zunächst unabhängig voneinander drehbar gelagert, bis eine Beschichtereinheit damit verbunden wird. Sofern die Trägerelemente spiegelbildlich zueinander angeordnet werden, bilden die mit ihnen verbundenen Auflagen eine gemeinsame Auflageebene.

Aufgrund dieser Anordnung ist es möglich, die Beschichtereinheit in einer definierten Position zu lagern und zu halten, so dass eine Wartung, Demontage oder Montage, sowie eine Reinigung von allen Seiten möglich ist. Bei Bedarf kann die Gesamtanordnung aus den beiden Drehböcken und der dazwischen aufgenommenen Beschichtereinheit dann so gedreht werden, dass ein Zugriff von der jeweils benötigten Seite erfolgen kann.

Um auch im Fall einer Drehung ein Herunterfallen der Beschichtereinheit zu vermeiden, wird die Beschichtereinheit mit den beiden Auflagen verklemmt. Die Verklemmung erfolgt dabei konkret durch jeweils eine Klemmbacke, die auf der zugehörigen Auflage verschieblich angeordnet sind. Ein Teil der Beschichtereinheit, der auf der Auflage platziert wird, wird hierbei von der auf die Beschichtereinheit zu verschobenen Klemmbacke übergriffen und aufgrund eines definierten Abstands zwischen Klemmbacke und Auflage, welche vorzugsweise kleiner als die Dicke des auf der Auflage liegenden Teils der Beschichtereinheit ist, gegen die Auflage gedrückt.

Um ein Abrutschen der Beschichtereinheit entlang der Auflagefläche zu vermeiden, kann dieser eine flächige Vertiefung zugeordnet sein, welche vorzugsweise in der Form und Dicke des aufgelegten Teils der Beschichtereinheit gebildet sein kann. In diesem Fall ist es zudem sinnvoll, wenn die Klemmbacken bereits an den Ebenen der Auflage unter Vorspannung anliegen.

Mit weiterem Vorteil sind die Trägerelemente um 360° drehbar, können also in jeder beliebigen Position zu den Standfüßen verbracht werden. Ferner können die Trägerelemente in unterschiedlichen Drehpositionen mit den Standfüßen verrastet werden. Aufgrund einer solchen Verrastung in unterschiedlichen Drehpositionen kann die Beschichtereinheit in allen Positionen festgelegt werden ohne sich aufgrund einer Unrundheit gegebenenfalls wieder in eine Richtung zurückdrehen.

Dies kann mit einigem Vorteil so gelöst sein, dass die Trägerelemente Rastelemente aufweisen, die mit Gegenrastmitteln der Standfüße zusammenwirken. Bei solchen Rastelementen und Gegenrastmitteln kann es sich insbesondere um eine Verzahnung handeln, die als drehsymmetrischer Zahnkranz rund um die Kontaktflächen zwischen Standfüßen und Trägerelementen angeordnet sein können. Solange die Rastelemente in die Gegenrastelemente eingreifen, verhindern sie eine gegenseitige Verdrehung. Mithilfe einer Trennvorrichtung können sie jedoch auch außer Eingriff gebracht, mithin in einen gegenseitigen Abstand gebracht werden, in dem ein gegenseitiges Verdrehen möglich ist.

Eine solche Trennvorrichtung kann insbesondere durch eine Verschraubung realisiert werden, welche mithilfe eines Handrades gelöst werden kann. Sie kann aber auch in einer Federung bestehen, die durch einen Spannhebel gelöst werden kann. Beispielsweise kann die Drehung zwischen Standfüßen und Trägerelementen um einen Achsbolzen herum erfolgen, welcher mit einer Feder versehen ist, die beide Teile gegeneinander drückt. Durch ein Betätigen eines Spannhebels wird die Federkraft überwunden und die beiden Teile auseinandergedrückt.

Nachdem in einem Metall-3D-Drucker das Metallpulver über die Beschichtereinheit abgegeben wird, ist es wahrscheinlich, dass bei einer Montage, Reparatur oder Wartung zu einem Austritt von Metallpulver aus der Beschichtereinheit kommt. Dabei ist mit einigem Vorteil ein Pulverbecken zwischen den Drehböcken, mithin zwischen den Standfüßen angeordnet. In einem solchen Pulverbecken kann das Metallpulver aufgefangen und zu einem späteren Zeitpunkt in einen Pulverbehälter verbracht und wieder aufs Neue eingesetzt werden.

Sofern ein solches Pulverbecken trichterförmig ausgebildet und mit einem Ablauf versehen ist, kann an dieses ein Pulverbehälter direkt angeschlossen werden, so dass das aus der Beschichtereinheit austretende Metallpulver direkt in den Pulverbehälter zurückrieseln kann. Vorzugsweise ist der Ablauf auch an sich pulverdicht verschließbar, so dass aufgefangenes Metallpulver auch zunächst gesammelt und zu einem späteren Zeitpunkt in einen Pulverbehälter abgefüllt werden kann.

Um die gegenseitige Abstandsposition der Drehböcke zu fixieren, können die Standfüße in einem definierten Abstand auf einer gemeinsamen Platte verschraubt sein. Soweit das Pulverbecken als solches eine solche Verschraubung erlaubt, kann diese Verschraubung auch direkt an dem Pulverbecken erfolgen.

Die vorstehend beschriebene Erfindung wird im Folgenden anhand eines Ausführungsbeispiels näher erläutert.

Es zeigen
- Figur 1: eine Vorrichtung aus zwei Drehböcken in einer offenen und unbestückten Position in perspektivischer Darstellung von vorne,
- Figur 2: die Vorrichtung gemäß Figur 1 in einer offenen Position mit eingelegter Beschichtereinheit in perspektivischer Darstellung von vorne,
- Figur 3: die Vorrichtung gemäß Figur 2 in einer geschlossenen Position mit eingelegter Beschichtereinheit in perspektivischer Darstellung von vorne, sowie
- Figur 4: die Vorrichtung gemäß Figur 3 in einer geschlossenen und gedrehten Position mit eingelegter Beschichtereinheit in perspektivischer Darstellung von vorne.

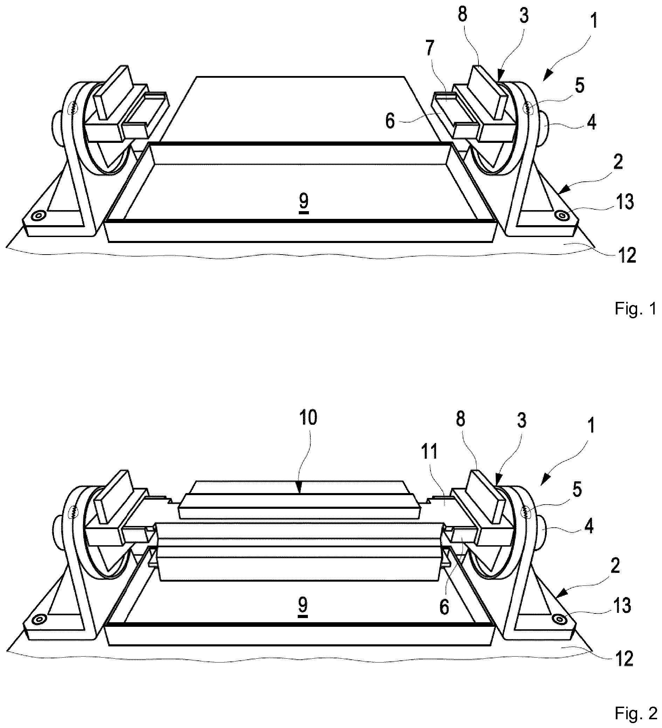

Figur 1 zeigt eine Vorrichtung zur Lagerung und Halterung einer Beschichtereinheit eines Metall-3D-Druckers, welche aus zwei Drehböcken 1 besteht. Es ist jeweils nur der rechte Drehbock mit Bezugszeichen versehen, die Merkmale des linken Drehbocks sind jedoch exakt identisch und spiegelbildlich zu dem rechten Drehbock.

Die Drehböcke 1 sind über einen Standfuß 2 und eine diesen fixierende Verschraubung 13 auf eine Platte 12 angeordnet. Dabei schließen die Drehböcke 1 einen solchen Abstand zwischen sich ein, dass eine in Figur 1 noch nicht gezeigte Beschichtereinheit 10 eines Metall-3D-Druckers zwischen ihnen aufgenommen werden kann. Dafür sind den Standfüßen 2 jeweils Trägerelemente 3 zugeordnet, die an den Standfüßen 2 drehbar gelagert sind. Die Trägerelemente 3 weisen jeweils Auflagen 6 auf, welche mit Vertiefungen 7 versehen sind. In die Vertiefungen werden Flansche 11 der Beschichtereinheiten 10 eingelegt, wie in Figur 2 gezeigt.

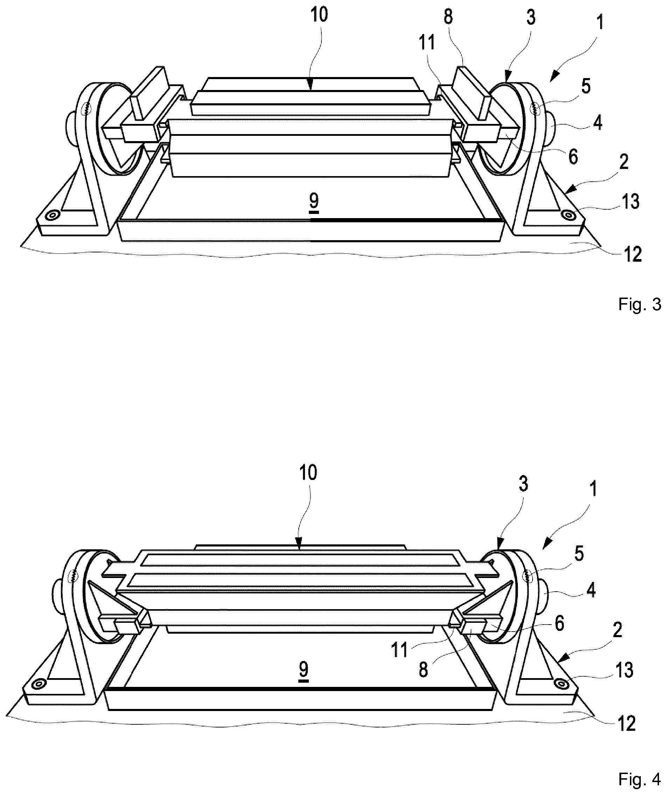

In der Figur 2 ist nunmehr eine Beschichtereinheit 10 mit ihren Flanschen 11 auf den Auflagen 6 formschlüssig in die Vertiefungen 7 eingelegt. Den Auflagen 6 der Trägerelemente 3 ist ferner jeweils eine Klemmbacke 8 zugeordnet, die in einer Führung entlang den Auflagen 6 aus einer die Vertiefung 7 freigebenden Offenstellung in eine die Vertiefung 7 übergreifenden Geschlossenstellung verschoben werden können, letzteres wie in Figur 3 gezeigt.

Figur 3 zeigt die Klemmbacken in der Geschlossenstellung, wobei die Klemmbacken nun den Flansch 11 der Beschichtereinheit 10 klemmend gegen die Auflage 6 bzw. in deren Vertiefung 7 hineindrückt. In dieser Position ist die Vorrichtung betriebsfertig. Wird mithilfe eines Spannhebels 4, mit welchem eine Verrastung 5 zwischen Standfüßen 2 und Trägerelement 3 außer gegenseitigen Eingriff gebracht werden kann, die Verrastung 5 nun geöffnet, so können die Trägerelemente 3 zusammen mit der Beschichtereinheit 10 um eine Drehachse herum gedreht werden, wie in Figur 4 gezeigt.

In dieser Position kann eventuell aus der Beschichtereinheit 10 austretendes Metallpulver in ein zwischen den Drehböcken 1 angeordnetes Pulverbecken 9 einrieseln und von dort wieder für den Betrieb des Metall-3D-Druckers zurückgewonnen werden. Hauptsächlich ist es durch die beschriebene Anordnung jedoch möglich, die Beschichtereinheit 10 drehbar und damit von allen Seiten zugreifbar zu lagern und so eine einfache Montage und Demontage, Reparatur und Wartung zu ermöglichen.

Vorstehend beschrieben ist somit eine Vorrichtung zur Lagerung und Halterung einer Beschichtereinheit eines Metall-3D-Druckers unter Verwendung von zwei Drehböcken, die eine gemeinsame und 360° drehbare Auflageebene ausbilden, so dass die Beschichtereinheit daran befestigt und beliebig von allen Seiten zugegriffen werden kann.

### BEZUGSZEICHENLISTE

- 1: Drehbock
- 2: Standfuß
- 3: Trägerelement
- 4: Spannhebel
- 5: Verrastung
- 6: Auflage
- 7: Vertiefung
- 8: Klemmbacke
- 9: Pulverbecken
- 10: Beschichtereinheit
- 11: Flansch
- 12: Platte
- 13: Verschraubung

## Patentansprüche

1. Vorrichtung zur Lagerung und Halterung einer Beschichtereinheit eines Metall-3D-Druckers, mit zwei einander spiegelbildlich gegenüberstehend angeordneten Drehböcken (1), jeweils umfassend einen Standfuß (2), an welchem dem jeweils anderen Drehbock (1) zugewandte, jeweils eine Auflage (6) ausbildende Trägerelemente (3) zugeordnet sind, wobei die Auflagen (6) der Trägerelemente (3) bei spiegelbildlicher Ausrichtung eine gemeinsame Auflageebene bilden,
**dadurch gekennzeichnet, dass** den beiden Auflagen (6) entlang einer Führung verschiebbare Klemmbacken (8) zugeordnet sind und die Klemmbacken (8) entweder einen definierten Abstand zwischen sich und den Auflagen (6) einschließen, oder den Auflagen (6) jeweils eine flächige Vertiefung (7) zugeordnet ist und die Klemmbacken (8) direkt auf der Ebene der Auflage (6) unter Vorspannung anliegen, wobei ferner die Drehböcke (1) in einem definierten Abstand beiderseits eines Pulverbeckens (9) zum Auffangen von Metallpulver durch Verschraubung (13) fixiert sind.

2. Vorrichtung gemäß Anspruch 1, wobei die Trägerelemente (3) um 360° drehbar sind.

3. Vorrichtung gemäß einem der vorhergehenden Ansprüche, wobei die Trägerelemente (3) in unterschiedlichen Drehpositionen mit den Standfüßen (2) verrastbar sind.

4. Vorrichtung gemäß Anspruch 3, wobei die Trägerelemente (3) Rastelemente aufweisen, welche mit Gegenrastmitteln der Standfüße (2) zusammenwirken und dabei die Trägerelemente (3) mit den Standfüßen (2) drehfest verbinden, wobei die Rastelemente der Trägerelemente (3) mithilfe einer Trennvorrichtung außer Eingriff der Gegenrastelemente der Standfüße (2) bringbar sind.

5. Vorrichtung gemäß Anspruch 4, wobei es sich bei der Trennvorrichtung um eine Verschraubung oder eine Federung mit einem Spannhebel (4) für eine händische Bedienung handelt.

6. Vorrichtung gemäß einem der vorhergehenden Ansprüche, wobei das Pulverbecken (9) einen Ablauf aufweist, an welchem ein Pulverbehälter pulverdicht anschließbar ist.

7. Vorrichtung gemäß Anspruch 6, wobei der Ablauf verschließbar ist.

## Claims

1. Device for mounting and holding a coater unit of a metal 3D printer, comprising two rotary blocks (1) arranged opposite one another in a mirror image, each comprising a base (2) with which carrier elements (3) that face the relevant other rotating block (1) and in each case form a support (6) are associated, the supports (6) of the carrier elements (3) forming a common support plane in the case of a mirror-image alignment,
**characterized in that** clamping jaws (8) that can be moved along a guide are associated with the two supports (6) and the clamping jaws (8) either enclose a defined distance between said jaws and the supports (6) or a planar depression (7) is associated with each of the supports (6) and the clamping jaws (8) rest directly on the plane of the support (6) under pretension, the rotary blocks (1) also being fixed at a defined distance on both sides of a powder basin (9) for collecting metal powder by means of a screw connection (13).

2. Device according to claim 1, wherein the carrier elements (3) are rotatable by 360°.

3. Device according to either of the preceding claims, wherein the carrier elements (3) can be locked in different rotational positions by means of the bases (2).

4. Device according to claim 3, wherein the carrier elements (3) have locking elements which interact with counter-locking means of the bases (2) and thereby connect the carrier elements (3) to the bases (2) in a rotationally fixed manner, wherein the locking elements of the carrier elements (3) can be brought out of engagement with the counter-locking elements of the bases (2) using a separating device.

5. Device according to claim 4, wherein the separating device is a screw connection or a spring mechanism having a clamping lever (4) for manual operation.

6. Device according to any of the preceding claims, wherein the powder basin (9) has an outlet to which a powder container can be connected in a powder-tight manner.

7. Device according to claim 6, wherein the outlet can be closed.

## Revendications

1. Dispositif de stockage et de maintien d'une unité de dispositif d'application de revêtement d'une imprimante 3D métal, comportant deux chevalets tournants (1) disposés selon une symétrie spéculaire l'un en face de l'autre, comprenant respectivement un pied (2) auquel sont associés des éléments porteurs (3) faisant respectivement face à l'autre chevalet tournant (1) et formant respectivement un support (6), dans lequel les supports (6) des éléments porteurs (3) forment un plan de support commun lors de l'alignement selon une symétrie spéculaire, **caractérisé en ce que** les deux supports (6) sont associés à des mâchoires de serrage (8) pouvant être déplacées le long d'un guide et les mâchoires de serrage (8) enferment une distance définie entre elles et les supports (6), ou un évidement (7) plat est respectivement associé aux supports (6) et les mâchoires de serrage (8) reposent directement sur le plan des supports (6) sous précontrainte, dans lequel, en outre les chevalets tournants (1) sont fixés au moyen d'un raccord à vis (13) à une distance définie des deux côtés d'un bac à poudre (9) permettant de collecter de la poudre métallique.

2. Dispositif selon la revendication 1, dans lequel les éléments porteurs (3) peuvent tourner sur 360°.

3. Dispositif selon l'une quelconque des revendications précédentes, dans lequel les éléments porteurs (3) peuvent être encliquetés dans différentes positions de rotation à l'aide des pieds (2).

4. Dispositif selon la revendication 3, dans lequel les éléments porteurs (3) comportent des éléments d'encliquetage, lesquels coopèrent avec des moyens de contre-encliquetage des pieds (2) et relient ainsi, de manière solidaire en rotation, les éléments porteurs (3) aux pieds (2), dans lequel les éléments d'encliquetage des éléments porteurs (3), à l'aide d'un dispositif de séparation, peuvent être mis hors prise des éléments de contre-encliquetage des pieds (2).

5. Dispositif selon la revendication 4, dans lequel le dispositif de séparation est un raccord à vis ou un mécanisme à ressort comportant un levier de serrage (4) pour une commande manuelle.

6. Dispositif selon l'une quelconque des revendications précédentes, dans lequel le bac à poudre (9) comporte un écoulement auquel un récipient à poudre peut être raccordé de manière étanche à la poudre.

7. Dispositif selon la revendication 6, dans lequel l'écoulement peut être fermé.
